# EUROPEAN PATENT APPLICATION

(11) **EP 0 872 717 A1**
(43) Date of publication of application: **21.10.1998**
(21) Application number: 98200811.2
(22) Date of filing: 13.03.1998
(51) Int. Cl.: G01F 23/24

(54) **Method for engine oil level measurement**

(30) Priority: 14.04.1997 US 839566
(71) Applicant: GENERAL MOTORS CORPORATION, Detroit Michigan 48202 (US)
(72) Inventor: Wang, Su-Chee Simon, Troy, Michigan 48098 (US)
(74) Representative: Denton, Michael John

(57) **Abstract**

A method is disclosed for determining an acceptable oil level in the reservoir (12) of an operating engine (10) comprising measuring the temperature of a suitably located electrical resistance temperature measuring device (40, 28) at the time of engine startup, heating the device (40, 28) with an electrical current for a period of about 10 second following engine startup, again measuring the temperature of the heated device (40, 28), determining the temperature increase and comparing said increase with historical data indicative of whether the device (40, 28) has been situated in engine oil or in air above the oil level in the reservoir (12).

## Description

### TECHNICAL FIELD

This invention pertains to a method for engine oil level measurement and, more specifically, it pertains to an electrical resistance heating and temperature measuring method of engine oil level detection that permits the generation of a signal to alert the operator of the engine to a low oil condition.

### BACKGROUND OF THE INVENTION

As is well known, a suitable quantity of lubricating oil is required in the operation of any internal combustion engine. In the typical four cycle engine, a separate oil reservoir is provided from which oil is pumped to and sprayed on moving parts of the engine to provide for their suitable lubrication and cooling. Of course, it is not uncommon in the operation of engines that some oil be lost to combustion, leakage or otherwise, and from time to time, engines fail for lack of suitable lubrication due to a low oil level in the oil reservoir.

Of course, a dipstick has long been used that extends from outside the engine into the engine oil reservoir and is suitably positioned to indicate the level of the oil in the reservoir, particularly when the engine is turned off and the oil has settled to a quiescent level in the reservoir. A difficulty with the use of the dipstick is that drivers fail to check their oil level. There are, of course, a number of electrical sensing devices which have been placed in the oil reservoir for the purpose of detecting the amount of oil in the reservoir and alerting the operator of the engine or the vehicle in which the engine is located of the presence of a suitable volume of oil. Such devices variously rely on capacitance or resistance measurements and accompanying electrical circuitry to detect and indicate the oil level in the oil reservoir of the engine.

There are also electrical devices which can be placed in the oil reservoir of an engine and employed for the purpose of sensing the quality of the lubricating oil including its type and condition. For example, U.S. Patent 5,274,335 to Wang et al and assigned to the assignee of this invention discloses such an oil sensing system.

It would be highly useful to have a suitable method for using an inexpensive oil level sensing means that could be placed in the oil reservoir of an engine to produce a signal responsive to low oil levels. It would be especially useful to have such a method that could be used in combination with the oil condition sensor system of the type described in U.S. Patent 5,274,335. This invention provides such an oil level sensor.

### SUMMARY OF THE INVENTION

This invention provides a method of briefly heating and measuring the temperature increase of an oil level sensor body to be situated in the oil reservoir of a four cycle internal combustion engine. The sensor body is suitably placed at a position in the reservoir at which a minimum suitable volume of the oil would collect during normal engine operation. Thus, should there be a less than minimal acceptable volume of oil, the sensor would be exposed to the air containing gas that occupies the oil pan of such an engine above the level of the oil.

In accordance with a preferred embodiment of the invention, the main portion of the sensor is an electrical resistance temperature measuring device. Such devices typically include an electrical insulator support body such as a thin alumina plate. A film of electrically-resistive material whose electrical resistance varies with temperature is deposited on the body in the form of a resistor to which suitable current conducting and voltage measuring leads are attached. One or more such resistors may be employed in the sensor.

The method that is described herein is practiced immediately upon engine startup. At engine startup, the temperature of the resistor body is initially measured, for example, by commencing passage of a constant current (I), e.g., 76 milliamperes, and immediately measuring the voltage drop across the resistor. This indicates the temperature of the resistor and the plate or small body upon which it is situated. Immediately thereafter and for a period up to about ten seconds following engine startup, the constant value electric current is passed through the resistor in order to heat it and its supporting plate above its original temperature. The amount of such temperature increase, of course, depends on whether the sensor body is immersed in oil, which readily conducts the heat away from the sensor, or it is immersed in air, which less effectively conducts heat away from the sensor. At the completion of the several second (preferably about ten seconds) heating period, the temperature of the sensor is again detected by measuring the voltage drop across it (i.e., its resistance) and the current flow is then stopped. The precise temperature increase of the sensor body is thus detected, and this temperature increase (ΔT) is compared with the temperature increase experience of such body both in oil and in the air above the oil in the reservoir. The difference in the temperature increase between a sensor body immersed in oil (i.e., a suitable oil level) and a sensor immersed in air is appreciable and useful. Depending upon the mass of the sensor body and the current flow, the temperature difference amounts to a few degrees Celsius, which is readily detectable. Thus the sensor can be effectively employed to advise an engine or vehicle operator of whether a suitable oil volume is in the reservoir.

This entire process is preferably carried out within a period of about 10 seconds of engine startup. The reason for this time limitation is that it has been found, as will be demonstrated below, that within this brief period even large displacement engines operated at a very high speed do not heat the oil in the reservoir to an extent that the subject method cannot be practiced during such a limited time period.

These and other objects and advantages of the invention will be better appreciated from a detailed description thereof which follows. Reference will be had to the drawings in which:

### BRIEF DESCRIPTION OF THE DRAWINGS

Figure 1 is an end view of a four cycle automotive internal combustion engine partly in section to show the oil reservoir and a location for a sensor body in the practice of the subject method.

Figure 2 is a side view of an oil condition sensor and an oil level sensor combination suitable for use in the practice of this invention.

Figure 3 is a plan view of a resistance temperature device (RTD) temperature probe on an alumina plate suitable for use in the practice of this invention.

Figure 4 is a graph depicting the change in temperature of an RTD temperature probe such as that depicted in Figure 3 when heated for a period of one to ten seconds.

### DESCRIPTION OF THE PREFERRED EMBODIMENT

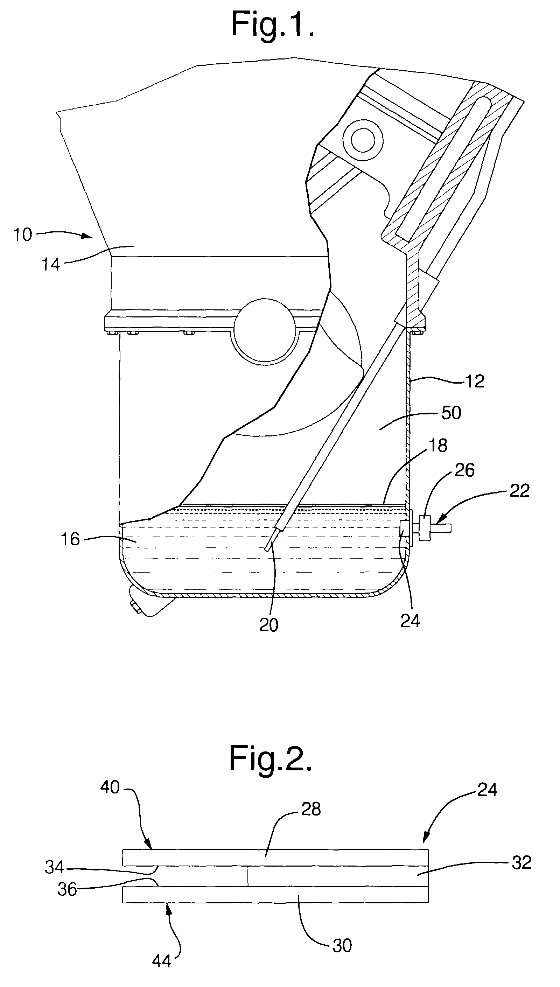

The practice of the method of this invention is carried out by placing a small heatable body, adapted so that its temperature can be measured, in the oil reservoir of an internal combustion engine. Figure 1 illustrates such an engine at 10. It is not necessary to describe all of the parts of the engine depicted in Figure 1, but at the lower end of the engine is an oil pan 12 which is affixed to the engine block 14. Oil pan 12 is adapted to contain a volume of oil 16 suitable for the lubrication of the engine during its operation. The upper surface 18 of oil 16 is shown in pan 12. As illustrated, the oil is quiescent because the engine is not operating. Also shown immersed in the oil is the conventional oil level measuring dipstick 20.

At the right side of oil pan 12 is shown an oil condition sensor (and, as used herein, an oil level sensor) indicated generally at 22. The oil condition sensor is described in U.S. Patent 5,274,335, and the construction and mode of operation of this sensor is incorporated herein by reference. Because of cost savings and operating efficiencies, it is preferred to adapt the oil condition sensor of the '335 patent for oil level detection by the subject method and the following description follows this preferred practice.

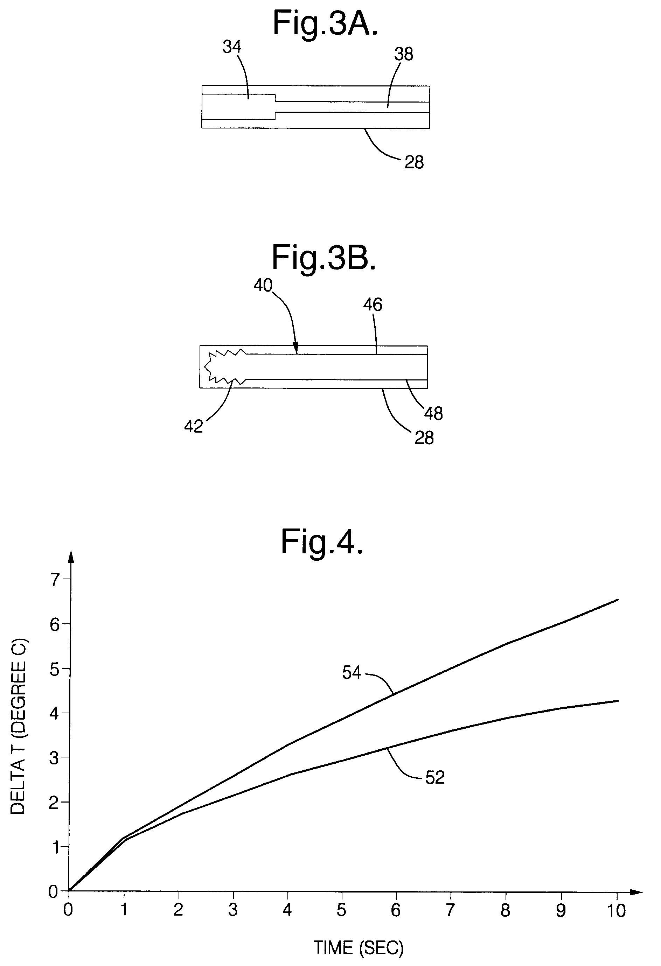

Briefly stated, the oil condition sensor 22 comprises a sensing element 24 located within the quiescent oil 16 in oil pan 12, and the sensor's associated circuit elements are situated outside the pan as shown at 26. The operating portion of the oil condition-oil level sensor 24 included inside the oil reservoir in the oil is more fully shown in Figure 2. Referring to Figure 2, the oil condition-oil level sensor is seen to include two thin alumina plates 28 and 30. These plates are nominally about one millimeter thick, seven millimeters wide and 50 millimeters in length. Plates 28 and 30 are fixed in spaced apart parallel relationship as seen in Figure 2 by alumina spacer 32. The gap is suitably about one millimeter. Platinum electrodes 34, 36 are located on the inside (i.e., facing) surfaces of alumina plates 28 and 30 for purposes of serving as the oil condition sensing function of the device which, as stated, is described in the '335 patent. Referring to Figure 3A, the platinum electrode 34 is depicted on the "inside" surface of alumina plate 28. The platinum electrode has an area of 5.8 mm by 20 mm. Its lead element is indicated at 40.

On the outside surfaces of both of the alumina plates 28 and 30 are resistance temperature device probes 40 and 44 (Figure 2). As better seen in Figure 3B with respect to "outside" surface plate 28, there is printed a suitable thermistor composition, saw-tooth shaped (for increased length and resistance) resistor element 42 with printed leads 46 and 48. The composition of the resistor element 42 is such that its resistance increases appreciably uniformly and predictively with temperature, and it can be employed by measurement of its resistance (i.e., of its voltage drop at known current flow) as a thermometer. Such resistance temperature devices (RTD) are commercially available. It is preferred that sensor 24 be positioned with plates 28 and 30 horizontal.

While a preferred embodiment of this invention is described in which the oil level sensing method is practiced in combination with an oil condition sensor device, it will be appreciated that the method could be practiced simply by using an RTD temperature probe alone.

The location of the oil level sensing device 24 in the oil reservoir is critical to the practice of this method. As illustrated in Figure 1, the device is located below the upper surface 18 of the quiescent oil volume 16 when the engine is not operating. The subject oil level detecting device is located at a predetermined oil level surface in the reservoir for a suitable minimum volume of oil when the engine is in operation and oil is being pumped from and draining back to the reservoir. It would be appreciated by looking at Figure 1 that when some of the oil is being pumped up into the operating parts of the engine, the illustrated level 18 will drop, and the sensor will then be located near the top surface of the oil volume in the reservoir when the engine is operating. Should the oil volume decrease below a suitable minimum desired level, the resistance temperature device will then be exposed to the air or air containing gas in volume 50 above the oil level then in the reservoir during the operation of the engine.

The practice of the subject method is carried out during a period immediately following engine startup. Preferably, the method is fully executed during the first ten seconds or so following engine startup and commencement of oil circulation. The reason for this requirement is that this oil level detection process is carried out by suitably heating the oil level sensor body and then measuring its increase in temperature. It is not desired to have the engine heat affect the oil level measurement. It has been observed and confirmed that in the operation of automotive engines -- even large displacement engines, for example, V-8 engines of several liters' displacement, the oil in the reservoir of such engines is not appreciably heated during the first ten seconds of engine operation, even if they are immediately revved up to high speed following engine startup.

Referring again to Figures 2 and 3, in accordance with the practice of the invention, either one or two RTD resistive circuits may be employed. Suitable electrical connections (not shown) may be applied to one of them for the purpose of passing a current through the resistive unit 42 for the purpose of heating it. The oil associated condition sensor already requires the application of a suitable voltage for its operation. A like electrical connection can be made to the resistive temperature device. In addition, means is also provided for measuring the voltage drop across resistor 42 at the beginning and end of such current flow so that its temperature increase can be ascertained. A typical RTD has a resistance of 100 ohms at 0°C. If two such resistance temperature devices are employed, as shown in Figure 2, they are sufficiently close together that the subject method can be practiced. In the alternative, a single device can be used as follows.

The initial temperature of the resistor 42 is determined by commencing current flow and measuring voltage drop across the resistor 42 immediately after turning on the engine, i.e., at T(0). Suitable constant value current flow is continued through the 100 ohm resistor unit 42. A suitable current, for example, may be 75 milliamperes. The current is on for only about ten seconds, and the temperature of the sensor is again measured at T(10) just before the current is turned off. The temperature rise is calculated. The temperature rise, of course, is the temperature at T(10) minus the temperature at T(0).

Figure 4 illustrates the temperature rise throughout ten seconds' heating of a resistance temperature device of 100 ohms resistance (at 0°C) when the device is heated with a current of 75 milliamps for a period of ten seconds. One such sensor was immersed in oil. Another sensor was in air. It is seen from the data plotted in Figure 4 that the temperature of the sensor body immersed in oil (curve 52) rose by about 4°C during the ten second heating, while the sensor body immersed in air (curve 54) increased in temperature about 6.5°C during the ten second heating period. Such temperature differences are readily measured using resistance temperature devices, and the determination as to whether the sensor is immersed in oil indicating a suitable oil level or exposed to air indicating a low oil level is determined from a pre-stored formula or from stored historical data gathered on such sensor bodies. For a given sensor body, it is found that the temperature increase is about the same over the range of ambient start-up temperatures encountered by automobiles. Depending upon the increase in temperature, a signal (usually no signal given when the data suggests that the sensor is immersed in oil) or an instrument panel light is illuminated when the pre-specified formula or look up data comparison confirms that the sensor was exposed to air.

In the preferred example described above, the sensor body is a very simple resistive heating element. In a more general device, any suitable small heatable mass can be used as a sensor, providing that its temperature can be readily determined. Thus, in the more general practice of the subject method, the temperature of a heatable mass is initially measured immediately upon engine turn-on. The mass is heated for a period up to about 10 seconds and its increase in temperature measured. A suitable ΔT is 3°C to 10°C. This increase in temperature is compared with the experience of such heatable masses over a range of initial temperatures and a determination made by comparing the increase in temperature with the experience as to whether the mass was initially exposed to oil or to air.

While the subject invention has been described in terms of a preferred embodiment thereof, it will be appreciated that other forms could readily be adapted by one skilled in the art.

## Claims

1. A method of detecting the level of oil (16) in the oil reservoir (12) of an engine (10) comprising:
placing a heatable body (28) in said reservoir (12) at a predetermined level at which said body (28) would be immersed in oil (16) during engine operation and oil circulation with a minimum predetermined volume of oil (16) in said reservoir (12) but exposed to air if less than such minimum volume of oil were present,
measuring the temperature of said body (28) immediately upon engine startup,
heating said body (28) for a period immediately after the engine is started and thereafter measuring the temperature of the body (28) again before the heat of engine combustion raises the temperature of the oil (16) in said reservoir (14),
determining the temperature increase in the body during said heating period, and
comparing such temperature increase with premeasured temperature increase data indicative of whether said body (28) is immersed in oil or exposed to air.

2. A method of detecting the level of oil (16) in the oil reservoir (12) of an engine (10) comprising:
placing an electrical resistance temperature measuring device (40, 28) in said reservoir (12) at a predetermined level at which said device (40, 28) would be immersed in oil (16) during engine operation and oil circulation with a minimum predetermined volume of oil (16) in said reservoir but exposed to air containing gas during engine operation with a less than minimum predetermined volume of oil,
measuring the temperature of said resistance temperature measuring device (40, 28) at engine startup,
passing an electrical current through said resistive temperature measuring device (40, 28) to heat it for a period immediately after the engine is started,
terminating said current flow before the heat of combustion raises the temperature of oil in the reservoir,
measuring the temperature of said resistance device (40, 28) at the end of said heating, and
determining the temperature increase of said device (40, 28), and comparing said temperature increase with historical values indicative of whether said device is immersed in oil or exposed to air.

3. A method as recited in claim 1 in which said body is heated for a period of up to about ten seconds.

4. A method as recited in claim 2 in which said resistive temperature measuring device is heated for a period of up to about ten seconds.
